# EUROPÄISCHE PATENTSCHRIFT

(11) **EP 2 131 018 B1**
(45) Veröffentlichungstag und Bekanntmachung des Hinweises auf die Patenterteilung: **17.04.2013**
(21) Anmeldenummer: 08010043.1
(22) Anmeldetag: 02.06.2008
(51) Int. Cl.: F01N 3/022

(54) **Filterelement für die Nachbehandlung von Abgasen aus Verbrennungskraftmaschinen**
Filter element for treating exhaust gases from combustion engines
Elément de filtre pour le post-traitement de gaz d'échappement à partir de moteurs à combustion

(43) Veröffentlichungstag der Anmeldung: 09.12.2009
(73) Patentinhaber: Alantum Corporation, Gyonggi-do (KR)
(72) Erfinder: Meister, David, Seongnam-city Gyonggi-do (KR); Markarian, Armen, Toronto, Ontario M9R 1M5 (CA); Schürholz, Sebastian, 73730 Esslingen (DE)
(74) Vertreter: Pfenning, Meinig & Partner GbR

(56) Entgegenhaltungen:
- EP-A- 1 726 698
- EP-A1- 1 889 647
- DE-A1- 4 137 738
- DE-A1-102005 025 136
- DE-A1-102005 061 958
- JP-A- 61 004 813

## Beschreibung

Die Erfindung betrifft Filterelemente für die Nachbehandlung von Abgasen aus Verbrennungskraftmaschinen. Mit einem Filterelement kann neben einer Separation von im Abgas enthaltenen Partikeln ggf. auch eine katalytische Nachbehandlung durchgeführt werden.

Bisher sind Partikelfilter und Katalysatoren in unterschiedlichster Form und aus verschiedenen Werkstoffen oder Materialien im Einsatz. Bekanntermaßen sind aber beispielsweise für eine Regeneration oder eine katalytische Wirksamkeit bestimmte Mindesttemperaturen erforderlich. Diese werden beim Betrieb von Verbrennungskraftmaschinen (Kaltstart, Teillast, Kurzstrecke) mit dem heißen Abgas teilweise nicht oder erst verzögert erreicht, so dass die Wirkung temporär eingeschränkt erreicht wird oder es zu einem Druckanstieg kommt, da die Porosität durch abgesetzten Russ verringert worden ist. Um dem entgegen zu wirken wurden unterschiedliche Maßnahmen, wie z.B. Zusatzheizungen, ergriffen. Dadurch erhöhen sich aber Kosten und Aufwand.

So ist es aus DE 10 2006 009 164 A1 bekannt ein Filtermedium, das aus einem metallischen offenporigen Schaum gebildet ist, einzusetzen. Dabei soll das vom Abgas durchströmte Filtermedium in Durchströmungsrichtung mit mindestens zwei Schichten gebildet sein und dabei eine sich verkleinernde Dicke, mittlere Porosität und/oder mittlere Porengröße in den Schichten vorhanden sein.

Bei dieser bekannten Vorrichtung sind Ein- und Auslasskanäle für Abgas vorhanden, die mit dem Filtermedium voneinander getrennt sind. In einer Ausführungsform sollen Einlasskanäle in Strömungsrichtung des Abgases einen sich verkleinernden freien Querschnitt aufweisen, wodurch die Umlenkung des strömenden Abgases im verengten Bereich, also auch am gasdicht verschlossenen Ende von Einlasskanälen unterstützt werden soll, so dass verbesserte Strömungsverhältnisse für das das Filtermedium durchströmende Abgas erreicht werden können.

Das mehrschichtige vom Abgas zu durchströmende Filtermedium weist aber wegen des mehrschichtigen Aufbaus über das gesamte Volumen keine konstanten Eigenschaften auf, was nicht nur auf die Permeabilität sondern auch auf elektrische und insbesondere thermische Parameter zutrifft.

Aus DE 41 37 738 A1 ist ein Rußfilter für eine Brennkraftmaschine bekannt, der eine Vielzahl von Ein- und Auslasskanälen aufweist. Deren Querschnitte sollen proportional zur Filterfläche, durch die der jeweilige Kanal begrenzt ist, sein. Der Filterkörper soll dabei als Anordnung ineinander geschachtelter Kegelstumpfflächen realisiert sein.

Aus der EP 1 889 647 A1 ist es bekannt, mehrere plattenförmige Elemente, in denen Ausschnitte vorhanden sind, hintereinander in einem Gehäuse anzuordnen und so einen Filter zu bilden.

Aufgabe der Erfindung ist es, Filterelemente zur Verfügung zu stellen, die verbesserte Eigenschaften für eine Nachbehandlung von Abgasen aufweisen und dabei die thermischen Eigenschaften verbessert sind.

Erfindungsgemäß wird diese Aufgabe mit einem Filterelement, das die Merkmale des Anspruchs 1 aufweist, gelöst. Vorteilhafte Ausgestaltungen und Weiterbildungen können mit in untergeordneten Ansprüchen bezeichneten Merkmalen erreicht werden.

Bei dem erfindungsgemäßen Filterelement sind Einlassund Auslasskanäle für Abgas vorhanden, die an sich jeweils diametral gegenüberliegenden Seiten verschlossen sind, so dass in Einlasskanäle einströmendes Abgas durch Trennwände hindurch in jeweils benachbarte Auslasskanäle und von dort weiter in Richtung Umgebung strömt. Zumindest die Trennwände sind aus einem offenporigen Werkstoff gebildet. Die Eintrittsöffnungen für Abgas in Einlasskanäle befinden sich dabei in Hauptströmungsrichtung des Abgases an einer Stirnseite eines Filterelementes und die Austrittsöffnungen an Auslasskanälen an der gegenüberliegenden Stirnseite.

Obwohl die Einlasskanäle und auch die Auslasskanäle sich verändernde freie Querschnitte aufweisen, sollen die diese trennenden Trennwände im vom Abgas durchströmten Bereich eine konstante Wandstärke aufweisen. Bevorzugt sollen die Trennwände in diesem Bereiche auch vollständig homogen ausgebildet sein, also eine konstante mittlere Porosität, mittlere Porengröße, Dichte aufweisen und aus dem gleichen Werkstoff gebildet sein.

Dies ist nicht nur vorteilhaft für das Strömungsverhalten, sondern es sind auch die gleichen thermischen Eigenschaften gegeben. Durch die konstante Wärmeleitfähigkeit können Wärmebrücken und Wärmesenken vermieden sowie eine gleichmäßigere Erwärmung in kürzerer Zeit im gesamten Volumen der Trennwände, das vom Abgas durchströmt wird, erreicht werden.

Als Werkstoff können bevorzugt Metalllegierungen und hier insbesondere Eisen- oder Nickellegierungen eingesetzt werden.

Erfindungsgemäße sind Filterelemente mit stoffschlüssig miteinander verbundenen plattenförmigen Elementen gebildet. Diese plattenförmigen Elemente sind zumindest im vom Abgas zu durchströmenden Bereich aus dem offenporigen metallischen Werkstoff gebildet. In den einzelnen plattenförmigen Elementen sind Durchbrechungen ausgebildet, die dann im mit den plattenförmigen Elementen gebildeten Stapel die Einlass- und auch die Auslasskanäle bilden.

In den einzelnen plattenförmigen Elementen sind Durchbrechungen ausgebildet. Die freien Querschnitte verändern sich aber von einem plattenförmigen Element zu einem benachbarten plattenförmigen Element, so dass eine Veränderung der freien Querschnitte der Ein- und Auslasskanäle erreicht werden kann.

Die plattenförmigen Elemente können beispielsweise analog zum an sich bekannten Schwarzwalder-Verfahren hergestellt werden. Die Durchbrechungen können mit einem Laserstrahl aus den einzelnen plattenförmigen Elementen herausgeschnitten werden. Dabei können auch nicht senkrechte Schneidkanten ausgebildet werden, um kontinuierliche Übergänge in den Kanälen von einem plattenförmigen Element zu einem daneben angeordneten plattenförmigen Element zu erreichen.

Die so vorbereiteten plattenförmigen Elemente können dann in vorgegebener Reihenfolge übereinander gestapelt und dann bei einer Wärmebehandlung stoffschlüssig miteinander verbunden werden. Bevorzugt wird dabei eine Sinterung durchgeführt und dabei kann auf die miteinander in Kontakt stehenden Oberflächen von plattenförmigen Elemente ein sinterbares Pulver das für die Herstellung der plattenförmigen Elementen eingesetzten Werkstoffs, aufgebracht werden. Bei der Wärmebehandlung können die miteinander zu verbindenden plattenförmigen und gestapelten Elemente zusammen gepresst werden.

Die freien Querschnitte von Ein- und Auslasskanälen können unterschiedlichste Geometrien und Dimensionen aufweisen. Dadurch kann eine Anpassung an unterschiedliche Verbrennungskraftmaschinen und die jeweiligen Abgasvolumenströme vorgenommen werden. Freie Querschnitte können rund, quadratisch, dreieckig, rechteckig oder mehreckig sein. Sie können aber auch die Gestalt von Kreisringsegmenten aufweisen.

Es kann vorteilhaft sein, dass Ein- und Auslasskanäle an einem Filterelement gleiche Geometrie und ggf. auch gleiche Dimensionierung aufweisen, wobei die Dimensionierung der freien Querschnitte dann, in Hauptströmungsrichtung gesehen, sich jeweils entgegengesetzt ändert. Verkleinert sich der freie Querschnitt von Einlasskanälen ausgehend von ihrer Einlassöffnung bis zur geschlossenen Stirnseite, so ist eine Vergrößerung des freien Querschnitts von Auslasskanälen ausgehend von ihrer geschlossenen Stirnseite bis hin zu ihrer Austrittsöffnung zu verzeichnen.

Dies ist insbesondere dann der Fall, wenn Ein- und Auslasskanäle in Form von Kegel- oder Pyramidenstümpfen ausgebildet sind.

Der gasdichte Verschluss von Ein- und Auslasskanälen kann mit hierfür geeigneten plattenförmigen Elementen, die an den beiden Stirnseiten in Bezug zur Hauptströmungsrichtung des Abgases angeordnet sind, erreicht werden. Hierfür können nicht poröse plattenförmige Elemente aus dem jeweiligen Metall eingesetzt werden. Es besteht aber auch die Möglichkeit plattenförmige Elemente mit deutlich kleinerer Porosität oder geschlossen porige Strukturen einzusetzen. Dies kann auch bei der einen zur Ausbildung der stoffschlüssigen Verbindung genutzten oder einer zusätzlichen Wärmebehandlung erreicht werden. Dabei können vorhandene Poren mittels einer Infiltration oder mit einem geeigneten metallischen Pulver zumindest weitgehend geschlossen werden.

Der gasdichte Verschluss kann aber auch mit einem hierfür geeigneten Gehäuse erreicht werden, in dem entsprechende Durchbrechungen für den Ein- und Austritt von Abgas ausgebildet sind. Dies kann im Mantelbereich, also dort wo keine Ein- und Auslassöffnungen für Abgas angeordnet sind, auch durch Infiltration oder mit einem metallischen Pulver durch Wärmebehandlung, wie vorab erläutert, erreicht werden. So kann dort eine ausreichend kleinere Porosität vorhanden oder Poren vollständig geschlossen sein.

Für eine katalytische Nachbehandlung von Abgas kann die Oberfläche von Trennwänden mit einer katalytisch wirksamen Beschichtung und/oder einem katalytisch wirksamen Stoff versehen werden. Dies kann und sollte auch in ihrem inneren porösen Bereich möglich sein. Hier kann auf an sich bekannte Lösungen und geeignete Stoffe zurückgegriffen werden.

Die Wandstärke der Trennwände sollte zumindest im vom Abgas durchströmten Bereich eine Dicke im Bereich 1,0 mm bis 25 mm, bevorzugt im Bereich 2 mm bis 20 mm aufweisen. Geringe Abweichungen der Wandstärke im Bereich der Ein- und Auslasskanäle durch die Abgas strömen kann, können aber toleriert werden, wenn die durch Trennwände strömenden Volumenströme annähernd konstant gehalten werden können.

An dem erfindungsgemäßen Filterelement sind auch zusätzlich Zwischenkanäle vorhanden, die Kammern bilden können und dabei das Abgas aus einem Einlasskanal durch eine Trennwand in einen Zwischenkanal und von dort durch eine weitere Trennwand in einen Auslasskanal strömen kann. Das wird mit einer Art Reihenanordnung, die mit zwei miteinander verbundenen Bereichen gebildet ist, hergestellt. Hierfür sind zwei solcher Bereiche mit plattenförmigen Elementen eingesetzt, bei denen mit den Durchbrechungen einseitig gasdicht geschlossene Kanäle in Form von Kegel- oder Pyramidenstümpfen ausgebildet sind. Diese sind dann entgegengesetzt zueinander ausgerichtet aufeinander gesetzt und genauso, wie die einzelnen plattenförmigen Elemente miteinander verbunden. Zwischenkanäle weisen dabei dann in Hauptströmungsrichtung des Abgases durch das Filterelement einen sich zuerst vergrößernden und dann wieder verkleinernden freien Querschnitt auf. Auch in diesem Fall weisen die Trennwände eine konstante Wandstärke auf.

Erfindungsgemäße Filterelemente'können an die jeweiligen Anforderungen einer Nachbehandlung von Abgasen spezifisch angepasst werden. So kann Einfluss auf Filterwirkungsgrad und/oder katalytischen Wirkungsgrad genommen werden. Dabei können die Herstellungskosten deutlich reduziert werden, da bei einer katalytischen Nachbehandlung der Einsatz katalytisch wirksamer Stoffe (insbesondere Edelmetalle) reduziert werden kann, ohne den Wirkungsgrad bei der Katalyse zu verschlechtern.

Nachfolgend soll die Erfindung an Hand von Beispielen näher erläutert werden.

Dabei zeigen:
Figur 1 ein nicht erfindungsgemäßes Beispiel eines Filterelementes in einer Schnittdarstellung;
Figur 2 ein nicht erfindungsgemäßes weiteres Beispiel eines Filterelementes in einer Schnittdarstellung;
Figur 3 ein erfindungsgemäßes Beispiel eines Filterelementes in einer Schnittdarstellung;
Figur 4 eine Draufsicht eines Filterelements und
Figur 5 eine perspektivische Darstellung eines Filterelements.

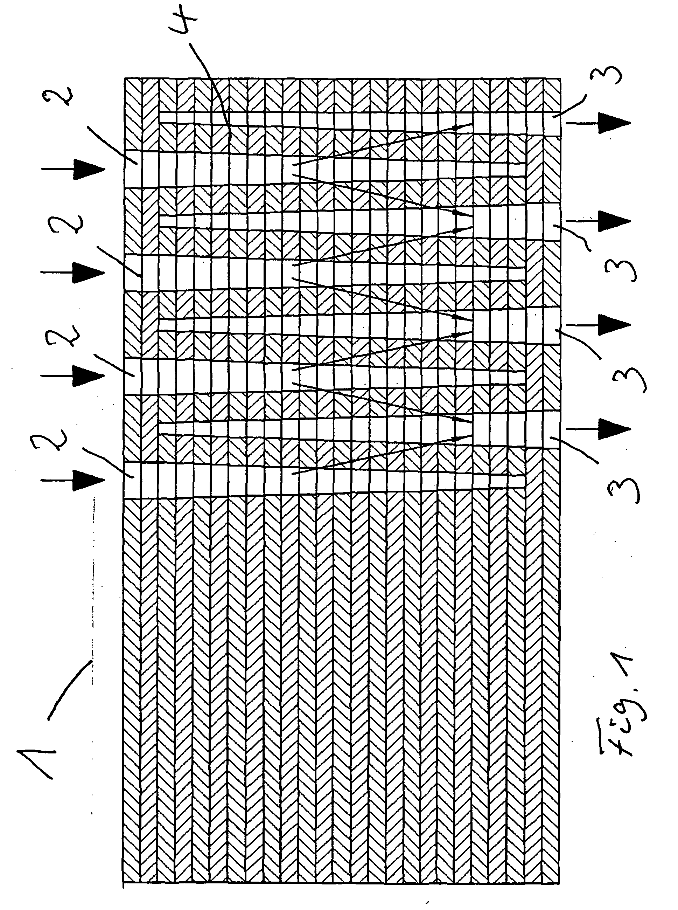

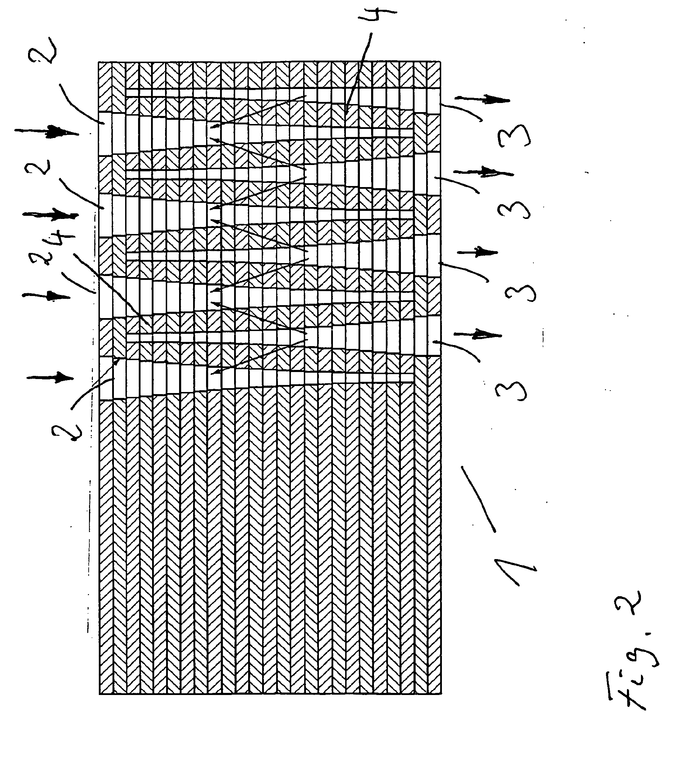

In den Figuren 1 bis 3 sind drei Beispiele Filterelemente dargestellt, die mit stoffschlüssig miteinander verbundenen plattenförmigen Filterelementen gebildet sind. Die plattenförmigen Filterelemente sind aus metallischem offenporigen Werkstoff gebildet und durch eine Wärmebehandlung miteinander versintert. Bei den in Figuren 1 und 2 gezeigten Beispielen sind dies 25 solcher plattenförmigen Filterelemente. Alle weisen jeweils gleiche Dichten, Porositäten und mittlere Porengrößen auf. Der metallische Werkstoff kann mit einer katalytisch wirksamen Beschichtung oder einem katalytisch wirksamen Stoff (z.B. durch Dotierung) zumindest im Bereich von Trennwänden 4 versehen sein.

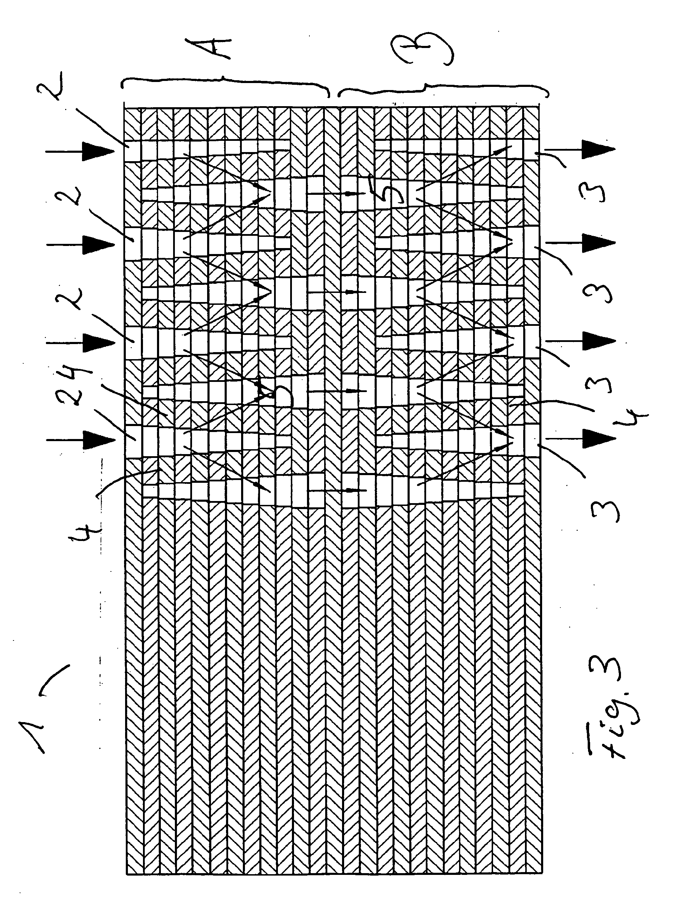

In den plattenförmigen Filterelementen sind Durchbrechungen durch Laserschneiden ausgebildet worden. Mit den Durchbrechungen in den einzelnen plattenförmigen Filterelementen sind wiederum die Einlasskanäle 2 und die Auslasskanäle 3 sowie beim in Figur 3 gezeigten Beispiel auch Zwischenkanäle 5 ausgebildet worden.

In den Darstellungen wird außerdem deutlich, dass sich der freie Querschnitt, durch den Abgas strömen kann, in den Einlasskanälen 2 und den Auslasskanälen 3 verändert. Die Wandstärke von Trennwänden 4 ist dabei über die gesamte Länge von Ein- und Auslasskanälen konstant bei 2,75 mm gehalten.

Die plattenförmigen Filterelemente haben eine konstante Dicke von 3 mm.

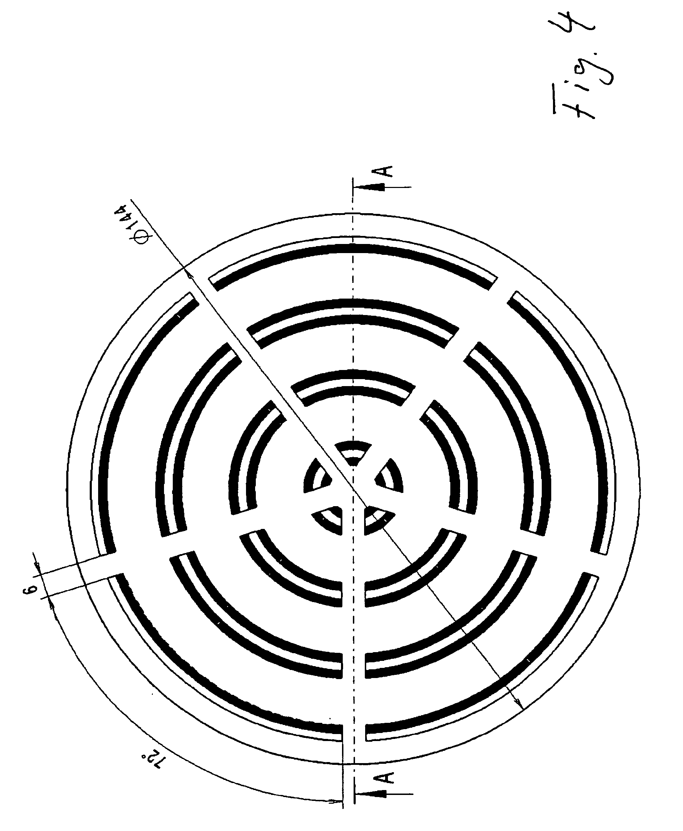

Beim in Figur 1 gezeigten nicht erfindungsgemäßen Beispiel eines Filterelements 1 sind die Durchbrechungen so ausgebildet worden, dass eine gleichmäßige konische Verjüngung an zwei Seiten der Ein- und Auslasskanäle auftritt. Die Stirnkanten an den Durchbrechungen sind dazu in einem Winkel geneigt ausgebildet. Ansonsten sind einige der Ein- und Auslasskanäle als Kreisringsegmente mit ihrem freien Querschnitt an einem zylinderförmigen Filterelement 1 ausgebildet, wie dies auch der Darstellung in Figur 4 entnommen werden kann. Der dort gezeigten Draufsicht ist auch die Schnittlinie A-A entnehmbar, die den Schnittdarstellungen der Figuren 1 bis 3 entspricht.

Beim in Figur 2 gezeigten nicht erfindungsgemäßen Beispiel sind Trennwände 5 von Einlass- und Auslasskanälen in Richtung des jeweiligen Kanals konvex gekrümmt, was zumindest auf die Bereiche zutrifft, die auf Radien des Filterelements 1 angeordnet sind. Im Gegensatz zu dieser dargestellten Form ist aber auch eine konkave Krümmung möglich.

Die Figur 3 zeigt ein erfindungsgemäß Beispiel eines Filterelements 1, das mit zwei miteinander verbundenen Bereichen A und B gebildet ist. Hier kann Abgas in Eintrittsöffnungen von Einlasskanälen 2 eintreten. Es strömt dann durch die Einlasskanäle 2, die Trennwände 4 in Zwischenkanäle 5 und von dort wieder durch weitere Trennwände 4 in Auslasskanäle 3.

Bei diesem Beispiel sind die Bereiche A und B durch ein plattenförmiges Filterelement getrennt, dass keine Durchbrechungen aufweist, so dass dieses in den Zwischenkanälen 5 eine zusätzliche Trennwand bilden kann. Dies ist mit den Pfeilen in diesem Teil der Zwischenkanäle 5 angedeutet.

Beim Durchströmen von Abgas durch Trennwände 4 kann einmal eine Separation von im Abgas enthaltenen Partikeln und auch eine katalytische Nachbehandlung durchgeführt werden.

In den Darstellungen ist aus Übersichtlichkeitsgründen die Anzahl von Bezugszeichen für Trennwände 4 begrenzt worden und auf die Darstellung eines äußeren Gehäuses wurde auch verzichtet.

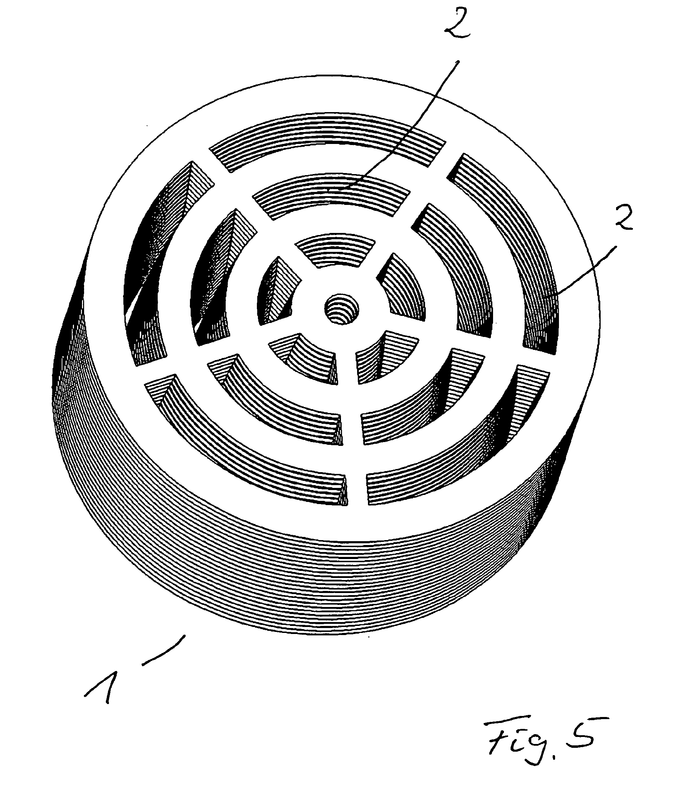

Die Figur 5 soll mit der perspektivischen Darstellung eine mögliche Ausbildung eines Filterelements 1 mit einer Anordnung und geometrischer Gestaltung von Einlasskanälen 2 verdeutlichen. Die hier nicht sichtbare Seite mit den Austrittsöffnungen von Auslasskanälen 3 kann dann komplementär ausgebildet sein.

## Patentansprüche

1. Filterelement für die Nachbehandlung von Abgasen aus Verbrennungskraftmaschinen, das mit einem offenporigen Werkstoff gebildet ist, dabei einseitig geschlossene Einlasskanäle und an der diametral gegenüberliegenden Seite geschlossene Auslasskanäle vorhanden sind, dabei das nachzubehandelnde Abgas in Einlasskanäle einströmt, durch die mit dem offenporigen metallischen Werkstoff gebildeten Trennwände hindurch in einen benachbart angeordneten Auslasskanal einströmt und aus diesem aus dem Filterelement ausströmt, wobei
der freie Querschnitt im Inneren der Ein- und Auslasskanäle (2, 3) in Ein- und Ausströmrichtung in oder aus den Einlass- und Auslasskanälen (2, 3) verändert und dabei die Wandstärke der die Einlass- und Auslasskanäle (2, 3) voneinander trennenden Trennwände (4) im vom Abgas durchströmten Bereich konstant gehalten ist,
**dadurch gekennzeichnet, dass** es aus miteinander stoffschlüssig verbundenen plattenförmigen Filterelementen, die einen Stapel bilden, gebildet ist, wobei die Einlass-, Auslasskanäle (2, 3) und die Trennwände (4) mittels in den plattenförmigen Filterelementen ausgebildeten Durchbrechungen ausgebildet sind und wobei ein Filterelement (1) mit zwei miteinander verbundenen Bereichen (A, B) gebildet ist, die eine Serienanordnung bilden, wobei Einlasskanäle (2), Zwischenkanäle (5) und Auslasskanäle vorhanden sind und
durch Einlasskanäle (2) eintretendes Abgas durch eine Trennwand (4) in Zwischenkanäle (5) und durch eine weitere Trennwand (4) in Auslasskanäle (3) strömt.

2. Filterelement nach Anspruch 1, **dadurch gekennzeichnet, dass** der freie Querschnitt von Einlass- und Auslasskanälen (2, 3) eine runde, quadratische, rechteckige, mehreckige geometrische Gestalt aufweisen oder in Form von Kreisringsegmenten ausgebildet sind.

3. Filterelement nach einem der vorhergehenden Ansprüche, **dadurch gekennzeichnet, dass** Einlass- und Auslasskanäle (2, 3) in Form eines Kegel- oder Pyramidenstumpfs ausgebildet sind.

4. Filterelement nach einem der vorhergehenden Ansprüche, **dadurch gekennzeichnet, dass** plattenförmige Filterelemente miteinander versintert sind.

5. Filterelement nach einem der vorhergehenden Ansprüche, **dadurch gekennzeichnet, dass** an beiden Stirnseiten gasdichte plattenförmige Filterelemente angeordnet sind, in denen an einer Stirnseite Durchbrechungen für Einlasskanäle (2) und an der anderen Stirnseite Durchbrechungen für Auslasskanäle (3) ausgebildet sind.

6. Filterelement nach einem der vorhergehenden Ansprüche, **dadurch gekennzeichnet, dass** die Oberfläche von Trennwänden (4) mit einer katalytisch wirksamen Beschichtung und/oder einem katalytisch wirksamen Stoff versehen ist.

7. Filterelement nach einem der vorhergehenden Ansprüche, **dadurch gekennzeichnet, dass** die Trennwände (4) im vom Abgas durchströmten Bereich eine konstante Porosität, Porengröße und Dichte aufweisen.

8. Filterelement nach einem der vorhergehenden Ansprüche, **dadurch gekennzeichnet, dass** der vom Abgas durchströmte Bereich des Filterelements (1) von einem gasdichten Gehäuse umschlossen ist, in einem äußeren Bereich eine kleinere Porosität vorhanden ist oder die Poren in diesem Bereich geschlossen sind.

9. Filterelement nach einem der vorhergehenden Ansprüche, **dadurch gekennzeichnet, dass** das Filterelement (1) mit einem offenporigen metallischen Werkstoff gebildet ist.

## Claims

1. A filter element for the aftertreatment of exhaust gas from internal combustion engines which is formed with an open-porous material, wherein intake ducts which are closed on one side and on the diametrically opposed side closed exhaust ducts are present, the exhaust gas which is to be after-treated flows into intake ducts through the partitions formed with the open-porous metallic material into an adjacent outlet duct and flows out from the filter element therefrom,
the free cross-section in the interior of the intake and exhaust ducts (2, 3) changing in the inflow and outflow direction into or out of the intake and exhaust ducts (2, 3) and in so doing the wall thickness of the partitions (4) separating the intake and exhaust ducts (2, 3) from each other in the region through which the exhaust flows being kept constant,
**characterised in that** it is formed from plate-shaped filter elements which are connected together in a material lock, and which form a stack, the intake ducts, exhaust ducts (2, 3) and the partitions (4) being formed by means of apertures formed in the plate-skzaped filter elements, and
a filter element (1) being formed with two regions (A, B) which are connected together, which form a series arrangement, with intake ducts (2), intermediate ducts (5) and exhaust ducts being present, and
exhaust gas which enters through intake ducts (2) flowing through a partition (4) into intermediate ducts (5) and through a further partition (4) into exhaust ducts (3).

2. A filter element according to Claim 1, **characterised in that** the free cross-sections of the intake and exhaust ducts (2, 3) have a round, square, rectangular, polygonal geometric form or are in the form of circular ring segments.

3. A filter element according to one of the preceding claims, **characterised in that** the intake and exhaust ducts (2, 3) are in the form of a truncated cone or truncated pyramid.

4. A filter element according to one of the preceding claims, **characterised in that** plate-shaped filter elements are sintered together.

5. A filter element according to one of the preceding claims, **characterised in that** gastight plate-shaped filter elements are arranged on both end faces, in which elements on one end face apertures for intake ducts (2) and on the other end face apertures for exhaust ducts (3) are formed.

6. A filter element according to one of the preceding claims, **characterised in that** the surface of partitions (4) is provided with a catalytically effective coating and/or a catalytically effective substance.

7. A filter element according to one of the preceding claims, **characterised in that** the partitions (4) in the region through which the exhaust gas flows have a constant porosity, pore size and density.

8. A filter element according to one of the preceding claims, **characterised in that** the region of the filter element (1) through which exhaust gas flows is surrounded by a gastight housing, a lower porosity exists in an outer region or the pores in this region are closed.

9. A filter element according to one of the preceding claims, **characterised in that** the filter element (1) is formed with an open-porous metallic material.

## Revendications

1. Elément filtrant pour le post-traitement de gaz d'échappement de machines à combustion interne, qui est formé d'un matériau à pores ouverts, où des conduits d'admission fermés d'un côté et des conduits de décharge fermés sur le côté diamétralement opposé sont présents, où le gaz d'échappement devant subir un post-traitement pénètre dans les conduits d'admission, pénètre, en traversant par les cloisons de séparation formées avec le matériau métallique à pores ouverts, dans un conduit de décharge agencé en position voisine, et s'échappe de celui-ci travers l'élément filtrant, dans lequel
la section transversale libre, dans le volume intérieur des conduits d'admission et de décharge (2, 3), est modifiée dans la direction de pénétration et d'échappement dans ou hors des conduits d'admission et de décharge (2, 3), et où l'épaisseur de paroi des cloisons de séparation (4) séparant l'un de l'autre les conduits d'admission et de décharge (2, 3) est maintenue constante dans la zone traversée par le gaz d'échappement,
**caractérisé en ce qu'**il est formé d'éléments filtrants en forme de plaques, reliés les uns aux autres par liaison de matière et formant un empilement, dans lequel les conduits d'admission et de décharge (2, 3) et les cloisons de séparation (4) sont réalisés au moyen de passages formés dans les éléments filtrants en forme de plaques, et dans lequel un élément filtrant (1) est formé avec deux zones (A, B), reliées l'une à l'autre et formant un agencement en série, dans lequel des conduits d'admission (2), des conduits intermédiaires (5) et des conduits de décharge sont prévus, et
le gaz d'échappement entrant par les conduits d'admission (2) s'écoule à travers une cloison de séparation (4) dans les conduits intermédiaires (5) et à travers une autre cloison de séparation (4) jusque dans les conduits de décharge (3).

2. Elément filtrant selon la revendication 1, **caractérisé en ce que** la section transversale libre des conduits d'admission et de décharge (2, 3) présente une configuration géométrique circulaire, carrée, rectangulaire, polygonale, ou présente la forme de segments d'anneau de cercle.

3. Elément filtrant selon l'une des revendications précédentes, **caractérisé en ce que** les conduits d'admission et de décharge (2, 3) sont configurés sous la forme d'un cône ou d'une pyramide tronqués.

4. Elément filtrant selon l'une des revendications précédentes, **caractérisé en ce que** des éléments filtrants en forme de plaques sont assemblés les uns aux autres par frittage.

5. Elément filtrant selon l'une des revendications précédentes, **caractérisé en ce que**, sur les deux faces frontales, des éléments filtrants en forme de plaques et étanches aux gaz sont agencés, dans lesquels des passages pour les conduits d'admission (2) sont réalisés sur une face frontale, et des passages pour des conduits de décharge (3) sont réalisés sur l'autre face frontale.

6. Elément filtrant selon l'une des revendications précédentes, **caractérisé en ce que** la surface des cloisons de séparation (4) est pourvue d'un revêtement à effet catalytique et/ou d'une substance à effet catalytique.

7. Elément filtrant selon l'une des revendications précédentes, **caractérisé en ce que** les cloisons de séparation (4) présentent une porosité, une grosseur de pores et une masse volumique constantes dans une zone traversée par le gaz d'échappement.

8. Elément filtrant selon l'une des revendications précédentes, **caractérisé en ce que** la zone de l'élément filtrant (1) traversée par le gaz d'échappement est entourée d'un carter étanche aux gaz, **en ce que** dans une zone extérieure une porosité plus faible est présente ou **en ce que**, dans cette zone, les pores sont fermés.

9. Elément filtrant selon l'une des revendications précédentes, **caractérisé en ce que** l'élément filtrant (1) est constitué d'un matériau métallique à pores ouverts.
